Europäisches Patentamt

European Patent Office

Office européen des brevets

(11) Numéro de publication: **0 262 018**
**A1**

## (12) DEMANDE DE BREVET EUROPEEN

(21) Numéro de dépôt: **87401963.1**

(22) Date de dépôt: **02.09.87**

(51) Int. Cl.4: **G 01 T 1/36**
**G 01 T 1/208**

(30) Priorité: **05.09.86 FR 8612498**

(43) Date de publication de la demande:
**30.03.88 Bulletin 88/13**

(84) Etats contractants désignés: **DE GB IT**

(71) Demandeur: **COMMISSARIAT A L'ENERGIE ATOMIQUE**
**31/33, rue de la Fédération**
**F-75015 Paris (FR)**

(72) Inventeur: **Basset, Claude**
**Résidence Bellevue, Esc D Avenue Jules Marquis**
**F-91220 Bretigny (FR)**

**Pastor, Jean-François**
**10 rue du Dauphiné App. 71**
**F-91300 Massy (FR)**

(74) Mandataire: **Mongrédien, André et al**
**c/o BREVATOME 25, rue de Ponthieu**
**F-75008 Paris (FR)**

(54) **Système de traitement de signaux issus d'un dispositif de détection de rayonnements et sonde de détection de rayonnements, comportant ce système.**

(57) Système de traitement de signaux issus d'un dispositif de détection de rayonnements et sonde de détection de rayonnements, comportant ce système.

Le système (2) comprend des moyens (6) d'amplification des signaux issus du dispositif, signaux dont les amplitudes sont proportionnelles aux énergies des rayonnements, et des moyens (8) de discrimination et de mise en forme, à plusieurs fenêtres d'énergie, munis de moyens de sélection de ces fenêtres et aptes à fournir, étant donné une fenêtre sélectionnée, des impulsions à partir des signaux amplifiés, seulement pour les rayonnements dont les énergies sont comprises dans cette fenêtre, en vue du comptage de ces impulsions. La sonde comprend le système et le dispositif.

Application à la mesure de l'activité d'une source radioactive X ou gamma.

FIG. 1

EP 0 262 018 A1

## Description

SYSTEME DE TRAITEMENT DE SIGNAUX ISSUS D'UN DISPOSITIF DE DETECTION DE RAYONNEMENTS ET SONDE DE DETECTION DE RAYONNEMENTS, COMPORTANT CE SYSTEME

La présente invention concerne un système de traitement de signaux issus d'un dispositif de détection de rayonnements ainsi qu'une sonde de détection de rayonnements comportant ce système. Elle s'applique notamment aux mesures d'activités de radio-éléments qui émettent des rayonnements X ou des rayonnements gamma.

On connaît déjà un appareil commercialisé par la société THOMSON CFS sous la référence CAB TROP qui, associé à un photo-multiplicateur muni d'un photo-scintillateur en iodure de sodium, permet d'effectuer des mesures d'activités de radio-éléments dont l'émission se situe dans le spectre X (qui va de 10 à 70 keV environ). Cet appareil présente l'inconvénient de ne pas comporter de système de sélection d'une fenêtre ou domaine, d'énergie, ce qui nuit à la détection du rayonnement X seul, le bruit de fond étant également pris en compte.

On connaît également un appareil commercialisé par la société NARDEUX sous la référence LON 307 qui, associé à un photo-multiplicateur muni d'un photo-scintillateur en iodure de sodium protégé par une fenêtre en beryllium, permet également d'effectuer les mesures d'activité en question. Cet appareil, qui contrairement à l'appareil décrit plus haut comporte un discriminateur monocanal, présente néanmoins les inconvénients suivants : le discriminateur monocanal de l'appareil considéré permet seulement de sélectionner un rayonnement X dont l'énergie est de l'ordre de 17 keV ; ce discriminateur utilise en outre les caractéristiques d'entrée d'une porte logique, caractéristiques qui évoluent avec la température ; enfin, du fait de sa conception, le discriminateur se dérègle facilement et l'on observe un déplacement de sa fenêtre au cours du temps.

La présente invention a pour but de remédier aux inconvénients précédents en proposant un système qui possède plusieurs fenêtres d'énergie et peut être avantageusement réalisé avec des fenêtres dont les seuils haut et bas sont réglables de façon simple, avec une bonne stabilité en temps et en température de ces réglages, tout en ne consommant que peu d'énergie électrique et en n'étant pas plus encombrant que l'appareil de la société NARDEUX, mentionné plus haut.

De façon précise, la présente invention a pour objet un système de traitement de signaux susceptibles d'être fournis par un dispositif de détection de rayonnements, tel que ces signaux aient des amplitudes sensiblement proportionnelles aux énergies des rayonnements, le système étant destiné à être relié au dispositif et étant caractérisé en ce qu'il comprend :

- des moyens d'amplification des signaux susceptibles d'être fournis par le dispositif, et
- des moyens de discrimination et de mise en forme, à plusieurs fenêtres d'énergie, munis de moyens de sélection de ces fenêtres et aptes à fournir, étant donné une fenêtre sélectionnée, des impulsions à partir des signaux amplifiés par les moyens d'amplification, seulement pour les rayonnements dont les énergies sont comprises dans cette fenêtre, en vue du comptage de ces impulsions.

Selon un mode de réalisation préféré du système objet de l'invention, ce système comprend en outre des moyens de régulation de tension électrique, aptes à fournir une tension électrique sensiblement constante au cours du temps, aux moyens d'amplification et aux moyens de discrimination et de mise en forme.

Les composants électroniques de ces moyens sont ainsi protégés contre les variations de tension. Par exemple, en cas d'alimentation du système par des accumulateurs, l'interposition des moyens de régulation de tension entre ces accumulateurs et le système protège les composants électroniques de ce dernier en cas de surcharge des accumulateurs.

Selon un mode de réalisation avantageux du système objet de l'invention, les moyens d'amplification comprennent un filtre en fréquence, choisi de façon que l'amplitude des signaux de sortie des moyens d'amplification soit proportionnelle à l'amplitude des signaux d'entrée de ces moyens, dans le domaine des énergies que les rayonnements sont susceptibles d'avoir.

Dans une réalisation particulière de l'invention, chaque fenêtre d'énergie étant définie par un seuil inférieur d'énergie et par un seuil supérieur d'énergie, les moyens de discrimination et de mise en forme comprennent :

- des comparateurs respectivement associés aux seuils d'énergie, chaque comparateur ayant une entrée + reliée à la sortie des moyens d'amplification et une entrée - portée à un potentiel réglé en fonction du seuil d'énergie associé,
- des moyens de commutation, reliés aux moyens de sélection des fenêtres et prévus pour fournir, suivant la fenêtre sélectionnée, deux signaux respectivement représentatifs des résultats des comparaisons du signal de sortie des moyens d'amplification aux deux potentiels correspondant cette fenêtre,
- des moyens de traitement de ces deux signaux, munis d'une sortie prévue pour fournir un signal dont l'amplitude varie entre une valeur minimale et une valeur maximale et qui atteint la valeur minimale seulement pour les énergies comprises dans la fenêtre, et
- une porte logique OU dont les deux entrées sont reliées à la sortie des moyens de traitement et dont la sortie est apte à fournir lesdites impulsions.

Les moyens de traitement peuvent comprendre un circuit monostable à deux entrées destinées à recevoir respectivement les deux signaux représentatifs des résultats des comparaisons, et un circuit intégrateur dont l'entrée est reliée à la sortie du circuit monostable et dont la sortie est reliée aux deux entrées de la porte OU.

De préférence, les moyens de discrimination et de mise en forme comprennent en outre des moyens aptes à donner auxdites impulsions une amplitude adaptée à des moyens prévus pour leur comptage.

De préférence également, le dispositif destiné à être relié aux moyens d'amplification nécessitant une tension électrique d'alimentation, le système comprend en outre des moyens d'ajustement de cette tension.

Ces moyens d'ajustement permettent, avec un dispositif de détection tel qu'un photo-multiplicateur qui nécessite une très haute tension d'alimentation, un réglage de cette tension, de façon à obtenir, pour un photo-multiplicateur donné, un compromis optimal entre la sensibilité de ce photo-multiplicateur et le bruit de fond produit par ce dernier.

Les rayonnements peuvent être des rayons X.

Selon un mode de réalisation particulier du système objet de l'invention, les moyens de discrimination et de mise en forme ont une première, une deuxième et une troisième fenêtre d'énergie, chaque fenêtre étant définie par un seuil inférieur d'énergie et un seuil supérieur d'énergie, et la deuxième fenêtre contient la première et la troisième fenêtres et a des seuils inférieur et supérieur qui sont respectivement égaux au seuil inférieur de la première fenêtre et au seuil supérieur de la troisième fenêtre.

Dans le cas de rayonnements X, les fenêtres peuvent être les intervalles d'énergie allant respectivement de 10 keV à 30 keV, de 10 keV à 70 keV et de 50 keV à 70 keV, environ.

La présente invention concerne également une sonde de détection de rayonnements, comprenant :
- un dispositif de détection de ces rayonnements, apte à fournir des signaux dont les amplitudes sont sensiblement proportionnelles aux énergies des rayonnements, et
- un système de traitement de ces signaux, sonde caractérisée en ce que ledit système est conforme au système également objet de l'invention.

Enfin, selon un mode de réalisation particulier de la sonde objet de l'invention, le dispositif comprend un photomultiplicateur associé à un scintillateur sensible aux rayonnements.

La présente invention sera mieux comprise à la lecture de la description qui suit, d'un exemple de réalisation donné à titre purement indicatif et nullement limitatif, en référence aux dessins annexés sur lesquels :
- la figure 1 est une vue schématique d'un mode de réalisation particulier de la sonde objet de l'invention, comportant un photo-multiplicateur ainsi qu'un système conforme à l'invention,
- la figure 2 est un schéma du photo-multiplicateur et de moyens d'ajustement de la tension de ce photo-multiplicateur, faisant partie de la sonde représentée sur la figure 1,
- la figure 3 est un schéma de moyens d'amplification faisant partie de cette sonde,
- les figures 4 et 5 sont des schémas de moyens de discrimination et de mise en forme, faisant également partie de cette sonde,
- les figures 6, 7 et 8 sont des graphiques explicatifs du fonctionnement de ces moyens de discrimination et de mise en forme,
- la figure 9 est un schéma de moyens de régulation de tension faisant partie de la sonde,
- la figure 10 est un schéma explicatif du réglage des moyens de discrimination et de mise en forme, et
- la figure 11 représente un spectre obtenu au cours de ce réglage.

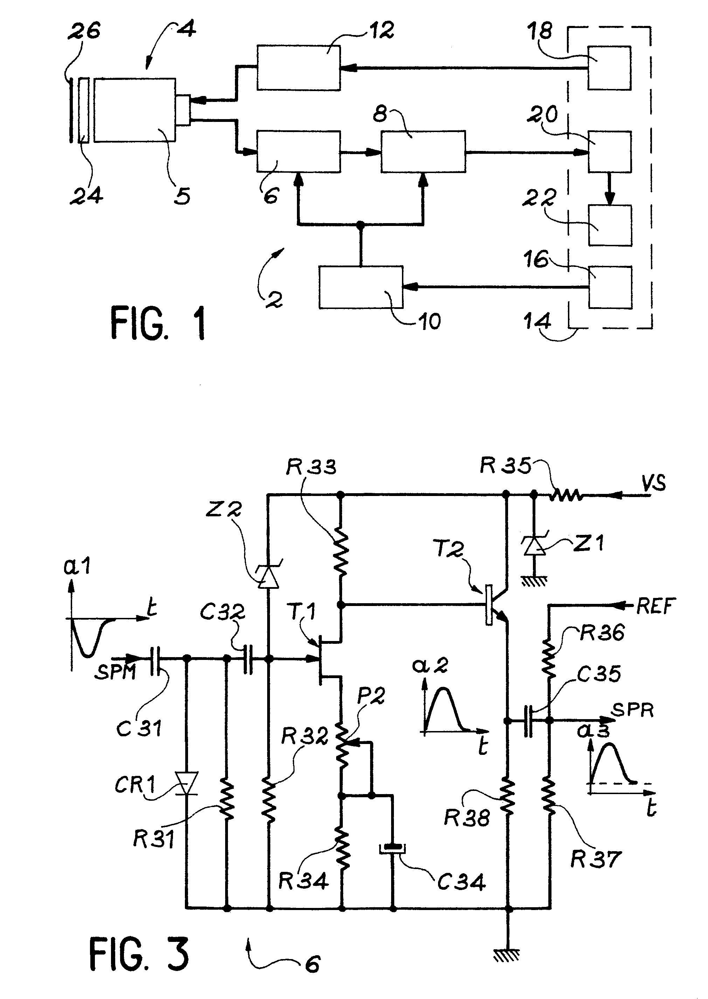

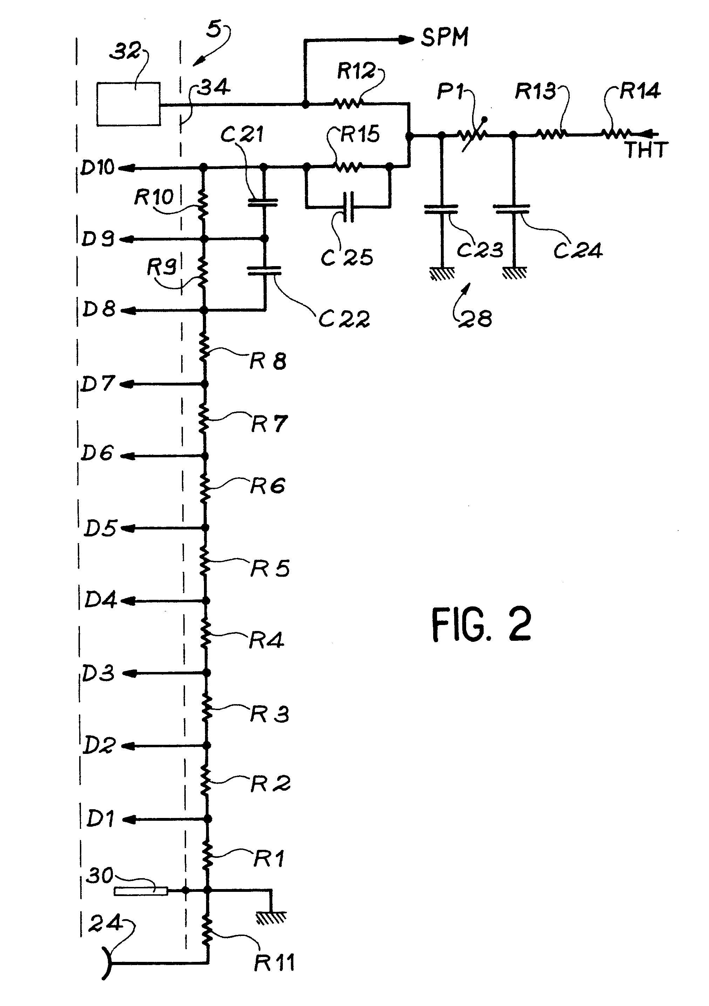

Sur la figure 1, on a représenté schématiquement un mode de réalisation particulier de la sonde objet de l'invention. Cette sonde comprend un dispositif 4 de détection de rayonnements X ainsi qu'un système 2 conforme à l'invention, destiné au traitement de signaux émis par le dispositif. Ce dispositif comporte un photo-multiplicateur 5 et le système comprend un pré-amplificateur 6 à gain réglable, dont l'entrée est reliée à la sortie du photo-multiplicateur 5, des moyens de discrimination et de mise en forme 8 dont l'entrée est reliée à la sortie du pré-amplificateur 6, un régulateur de tension 10 qui alimente le pré-amplificateur 6 et les moyens 8 en énergie électrique, et des moyens 12 de réglage de la très haute tension d'alimentation du photo-multiplicateur 5.

La sonde représentée sur la figure 1 est destinée à être associée un appareil de comptage d'impulsions 14 par exemple du genre de celui qui est commercialisé par la société THOMSON CFS sous la référence CAB TROP.

Cet appareil comprend un ensemble d'accumulateurs de courant 16, destiné à alimenter le régulateur de tension 10, des moyens 18 de production de la très haute tension, qui fournissent celle-ci aux moyens de réglage 12, des moyens de comptage d'impulsions 20 dont l'entrée est reliée à la sortie des moyens de discrimination et de mise en forme 8 ainsi que des moyens 22 d'affichage par exemple constitués par un ictomètre, dont l'entrée est reliée à la sortie des moyens de comptage 20.

Le photo-multiplicateur 5 est muni d'un bloc-scintillateur 24 à scintillateur en iodure de sodium, protégé par une fenêtre 26 en beryllium.

Les moyens 8 de discrimination et de mise en forme ont trois fenêtres d'énergie qui vont respectivement de 10 keV à 30 keV, de 10 keV à 70 keV et de 50 keV à 70 keV.

Ces fenêtres sont réglables au moyen de résistances ajustables (ou de potentiomètres variables).

Pour tout photon X incident sur le photo-scintillateur du bloc 24, le photo-multiplicateur 5 fournit un signal dont l'amplitude est proportionnelle à l'énergie du photon. Ce signal est amplifié et mis en forme par le pré-amplitificateur 6. Une fenêtre d'énergie étant sélectionnée, si l'énergie du photon est comprise dans cette fenêtre, les moyens 8 de discrimination et de mise en forme fournissent alors une impulsion aux moyens de comptage 20 mais ne fournissent aucune impulsion lorsque l'énergie du photon n'est pas comprise dans la fenêtre sélectionnée.

Sur la figure 2, on a représenté schématiquement le photo-multiplicateur 5 et les moyens 28 permettant

0 262 018

d'ajuster ou de régler à une valeur convenable la très haute tension d'alimentation de ce photo-multiplicateur.

Le photo-multiplicateur 5 comprend une cathode 30, dix dynodes référencées respectivement D1, D2, ..., D10 et une anode 32. Un pont de dix résistances respectivement référencées R1, R2, ..., R10 permet la polarisation des dynodes du photo-multiplicateur. La résistance R1 est montée entre la cathode et la dynode D1 et les résistances R2, R3, ..., R10 sont respectivement montées entre les dynodes D1 et D2, D2 et D3, ..., D9 et D10.

Sur la figure 2, on a également représenté le blindage 34 du photo-multiplicateur. Ce blindage, de même que la cathode 30, est mis à la masse. Une résistance R11 est montée entre le bloc-scintillateur 24 et le blindage du photo-multiplicateur. Cette résistance a pour fonction d'empêcher l'amorçage de l'embout du photo-multiplicateur, ce qui causerait un bruit de fond très important.

Le signal SPM issu de l'anode 32 du photo-multiplicateur est envoyé à l'entrée du pré-amplificateur 6.

Les moyens de réglage de la très haute tension d'alimentation du photo-multiplicateur comprennent un potentiomètre P1 dont une borne est reliée à l'anode 32 par l'intermédiaire d'une résistance de charge R12 et dont l'autre borne est portée à un potentiel THT correspondant à la très haute tension, par l'intermédiaire de deux résistances électriques R13 et R14 qui sont montées en série et destinées à limiter le courant d'alimentation du photo-multiplicateur.

Une borne d'un condensateur de découplage C23 est reliée à une borne du potentiomètre P1 tandis que l'autre borne du condensateur C23 est reliée à la masse. De même une borne d'un autre condensateur de découplage C24 est reliée à l'autre borne du potentiomètre P1 tandis que l'autre borne du condensateur C24 est reliée à la masse.

La borne de la résistance de charge R12 qui est reliée au potentiomètre P1 est également reliée à une borne d'un filtre composé d'une résistance R15 et d'un condensateur C23 montés en parallèle tandis que l'autre borne du filtre est reliée à la dynode D10. Enfin, un condensateur de filtrage C21, monté en parallèle à la résistance R10, relie les dynodes D9 et D10 et un autre condensateur de filtrage C2, monté en paralléle la résistance R9, relie les dynodes D8 et D9.

A chaque photo-multiplicateur est associée une valeur optimale de la très haute tension d'alimentation. Dans les limites de fonctionnement, une très haute tension importante donne une plus grande sensibilité mais également un fort bruit de fond. Il est donc nécessaire de déterminer, pour chaque photo- multiplicateur, la très haute tension garantissant un bruit de fond acceptable pour une sensibilité correcte. Le potentiomètre P1 permet d'obtenir une chute de tension convenable, pour le photo-multiplicateur utilisé. En régle générale, la tension optimale d'alimentation du photo-multiplicateur est comprise entre 1150 et 1200 volts (l'appareil commercialisé sous la référence CAB TROP étant capable de fournir un courant continu de 1mA sous une tension de 1740 volts environ).

A titre purement indicatif mais nullement limitatif, les différents composants utilisés dans le schéma représenté sur la figure 2 sont du type suivant :
Photo-multiplicateur = 32YB1 de RTC
R1 = 680 kilo-ohms    R6 = 390 kilo-ohms
R2 = 390 kilo-ohms    R7 = 390 kilo-ohms
R3 = 680 kilo-ohms    R8 = 390 kilo-ohms
R4 = 390 kilo-ohms    R9 = 390 kilo-ohms
R5 = 390 kilo-ohms    R10 = 390 kilo-ohms
R11 = 47 mégohms
P1 = variable de 0 à 2 mégohms
R12 = 100 kilo-ohms    R14 = 330 kilo-ohms
R13 = 470 kilo-ohms    R15 = 330 kilo-ohms
C21 = 4,7 nF tension de claquage : 630 V
C22 = 4,7 nF tension de claquage : 630 V
C23 = 10 nF tension de claquage : 2 kV
C24 = 10 nF tension de claquage : 2 kV
C25 = 4,7 nF tension de claquage : 630 V

Sur la figure 3 on a représenté un schéma du pré-amplificateur 6. Celui-ci comprend un condensateur d'isolement C31 dont une borne est reliée à l'anode 32 du photo-multiplicateur 5 et reçoit ainsi le signal SPM fourni par ce photo-multiplicateur. L'autre borne du condensateur C31 est reliée à l'anode d'une diode CR1 ainsi qu'à une borne d'une résistance de charge R31, la cathode de la diode CR1 et l'autre borne de la résistance R31 étant mises à la masse.

Le pré-amplificateur comprend également un transistor à effet de champ T1 dont la grille est reliée à l'anode d'une diode Zener Z2 de protection ainsi qu'à une borne d'un condensateur C32 transmettant le signal dont l'autre borne est reliée à ladite borne de la résistance R31. La grille du transistor T1 est également reliée à une borne d'une résistance de polarisation R31 dont l'autre borne est mise à la masse.

La cathode de la diode Z2 est reliée à une borne d'une résistance de polarisation R33 dont l'autre borne est reliée au drain du transistor T1. Ladite borne de la résistance R33 est également reliée au collecteur d'un transistor T2 de type NPN dont la base est reliée au drain du transistor T1 tandis que l'émetteur du transistor T2 est reliée à une borne d'une résistance de charge R38 dont l'autre borne est mise à la masse.

La source du transistor T1 est reliée à une borne d'une résistance ajustable P2 dont l'autre borne est reliée à une borne d'une résistance R34 et à la borne + d'un condensateur électrolytique C34. L'autre borne de la

4

résistance R34 ainsi que la borne - du condensateur C34 sont mises à la masse, ce condensateur C34 et la résistance R34 formant un filtre de fréquences.

Le collecteur du transistor T2 est également relié à la cathode d'une diode Zener Z1 dont l'anode est mise à la masse. La cathode de la diode Zener Z1 est également reliée à une borne d'une résistance R35 dont l'autre borne est portée à un potentiel VS grâce au régulateur de tension 10 qui sera décrit par la suite.

Deux résistances R36 et R37 ont une borne commune qui est reliée à l'émetteur du transistor T2 par l'intermédiaire d'un condensateur C35. Cette borne commune fournit le signal de sortie SPR du pré-amplificateur. L'autre borne de la résistance R37 est mise à la masse tandis que l'autre borne de la résistance R36 est portée à un potentiel de référence REF qui est fourni par les moyens de discrimination et de mise en forme comme on le verra par la suite.

Le photo-multiplicateur fournit un signal dont l'amplitude a1, représentée en fonction du temps t sur la figure 3, est proportionnelle au niveau d'énergie détecté. Ce signal est du type "impulsion négative".

A titre purement indicatif et nullement limitatif, les composants du pré-amplificateur représenté sur la figure 3 sont du type suivant :

C31 = 470 pF, tension de claquage : 6 kV  
C32 = 1 nF, tension de claquage : 100 V  
C34 = 10 microfarads, tension de claquage : 10 V  
C35 = 1 nF, tension de claquage : 100 V  
R31 = 1 mégohm      R35 = 150 ohms  
R32 = 1,5 mégohm      R36 = 8,2 kilo-ohms  
R33 = 3,3 kilo-ohms      R37 = 1,5 kilo-ohms  
R34 = 470 ohms      R38 = 3,3 kilo-ohms  
P2 = variable de 0 à 1 kilo-ohm  
CR1 = 1N4148  
Z1 = BZX55C 9 V  
Z2 = BZX55C 15 V  
T1 = U310  
T2 = 2N2222

Dans l'exemple donné, il est souhaitable que le maximum de l'amplitude du signal fourni par le photo-multiplicateur, maximum qui est fixé par le réglage de la très haute tension, soit de l'ordre de 200 mV.

Les transistors T1 et T2 assurent la pré-amplification. Le réseau formé par la résistance ajustable P2, la résistance R34 et le condensateur électrolytique C34 permet d'ajuster la contreréaction, la résistance ajustable P2 permettant de régler le gain et le filtre R34, C34, la linéarité (en choisissant R34 et C34).

Les diodes CR1 et Z2 protègent le transistor T1.

Aux bornes de la résistance R38, le signal issu de l'anode du photo-multiplicateur se trouve amplifié et inversé (impulsion positive), l'amplitude maximale du signal amplifié a2 étant, dans l'exemple donné, de 5 volts.

Le condensateur C35 et les résistances R36 et R37 permettent de superposer au signal de sortie du pré-amplificateur, d'amplitude a3, une composante continue de l'ordre de 1 volt dans l'exemple donné. Ceci permet d'obtenir un fonctionnement correct des comparateurs utilisés, comme on le verra par la suite, dans les moyens de discrimination et de mise en forme, même sous signaux faibles.

La diode Zener Z1 permet de fixer le potentiel d'alimentation du pré-amplificateur, ce potentiel d'alimentation étant de 9 volts dans l'exemple donné. Il faut en effet être sûr du gain du pré-amplificateur car toute variation de tension aurait pour conséquence une variation de l'amplitude du signal de sortie et, par suite, une erreur dans la sélection des niveaux d'énergie.

Dans l'exemple donné, le potentiel VS appliqué à l'autre borne de la résistance R35 est de l'ordre de 12 volts et le potentiel de référence REF de l'ordre de 6 volts.

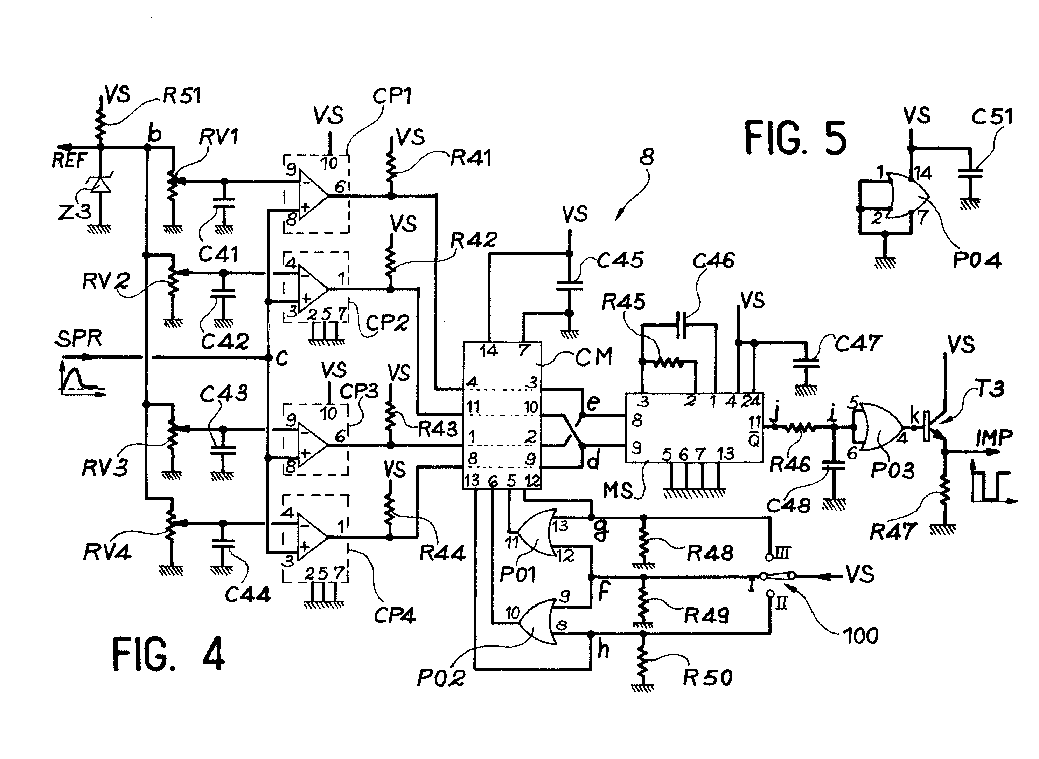

Sur la figure 4, on a représenté un schéma des moyens 8 de discrimination et de mise en forme. Ces moyens 8 comprennent deux doubles comparateurs rapides CP1, CP4 et CP2, CP3, prévus pour sélectionner les niveaux d'impulsions issues du pré-amplificateur, ainsi que quatre résistances ajustables RV1, RV2, RV3 et RV4. Les entrées + des comparateurs rapides sont reliées à un point c en lequel arrive le signal SPR issu du pré-amplificateur. Les entrées - des comparateurs CP1, CP2, CP3 et CP4 sont respectivement reliées aux curseurs des résistances ajustables RV1, RV2, RV3 et RV4, chacune de ces résistances ajustables ayant une borne mise à la masse et l'autre borne reliée un point commun b auquel aboutit une borne d'une résistance R51 ainsi que la cathode d'une diode Zener Z3, l'autre borne de la résistance R51 étant portée au potentiel VS et l'anode de la diode Zener Z3 mise à la masse. La résistance R51 et la diode Zener Z3 permettent d'obtenir le potentiel de référence REF (potentiel stable).

Les moyens 8 de discrimination et de mise en forme comprennent également quatre condensateurs de découplage C41, C42, C43 et C44. Quatre bornes respectives de ces quatre condensateurs sont mises à la masse tandis que les quatre autres bornes aboutissent respectivement aux liaisons entre les entrées - des comparateurs et les curseurs des résistances ajustables.

Les sorties des comparateurs sont sélectionnées par un commutateur CMOS programmable à quatre voies qui est référencé CM sur la figure 4, un condensateur de découplage C45 étant prévu au niveau de l'alimentation de CM. En outre, la sortie de chaque comparateur CP1, CP2, CP3, CP4 est reliée à une borne d'une résistance de charge R41, R42, R43, R44 dont l'autre borne est portée au potentiel VS.

Les moyens 8 de discrimination et de mise en forme comportent également un commutateur 100 à trois positions qui correspondent à trois bornes référencées I, II, III sur la figure 4. Ce commutateur 100 est prévu pour porter une borne I ou II ou III choisie au potentiel VS. Les moyens 8 de discrimination et de mise en forme comprennent aussi deux portes logiques OU qui sont référencées P01 et P02 sur la figure 4. Ces deux portes OU sont associées au commutateur à trois positions 100 et permettent de sélectionner une fenêtre d'énergie. La fenêtre 10-70 keV correspond la borne I, la fenêtre 10-30 keV correspond à la borne III et la fenêtre 50-70 keV correspond à la borne II. Les bornes I et III sont respectivement reliées aux entrées f et g de la porte P01, l'entrée f étant également une entrée de la porte P02, l'autre entrée h de cette porte P02 étant reliée à la borne II.

Les sorties des portes P01 et P02 ainsi que les entrées g et h sont reliées à des entrées appropriées du commutateur à quatre voies CM. En outre, des résistances R48, R49 et R50 relient respectivement les entrées g, f et h à la masse. Ces résistances permettent, lorsqu'une entrée f ou g ou h a été sélectionnée grâce au commutateur 100, de porter à l'état logique 0 les deux autres entrées.

La position I du commutateur 100 est associée aux résistances ajustables RV1 et RV4, la position II aux résistances ajustables RV3 et RV4 et la position III aux résistances ajustables RV1 et RV2.

Comme on le voit sur la figure 4, le commutateur à quatre voies CM comporte quatre broches de sortie qui sont appariées de façon appropriée pour faire apparaître deux bornes de sortie e et d, les connexions d'entrée et de sortie de ce commutateur à quatre voies étant réalisées de telle façon que les sorties des comparateurs, disponibles aux bornes e et d, soient, suivant la position du commutateur 100, celles que l'on a indiquées sur le tableau suivant :

| Position | e | d |
|----------|---|---|
| I | sortie de CP1 (a3 max-SB1 positif ?) | sortie de CP4 (a3 max-SH2 positif ?) |
| II | sortie de CP3 (a3 max-SB2 positif ?) | sortie de CP4 (a3 max-SH2 positif ?) |
| III | sortie de CP1 (a3 max-SB1 positif ?) | sortie de CP2 (a3 max-SH1 positif ?) |

tableau dans lequel a3 max représente le maximum de l'amplitude du signal SPR et SB1, SH1, SB2 et SH2 sont des potentiels qui correspondent respectivement à 10, 30, 50 et 70 keV et sont respectivement fixés par RV1, RV2, RV3 et RV4.

L'information présente aux bornes e et d est fournie à un monostable MS. Sur la figure 4, on a représenté un condensateur C46 et une résistance R45 qui sont connectés de façon appropriée au monostable MS et choisis en vue d'obtenir une constante de temps déterminée pour ce monostable (1,5 microseconde dans l'exemple donné). On a également représenté un condensateur référencé C47 qui est un condensateur de découplage pour l'alimentation de ce monostable.

Les moyens 8 de discrimination et de mise en forme comprennent également un intégrateur qui comprend une résistance R46 et un condensateur C48, une borne de la résistance R46 étant reliée à la sortie j du monostable MS tandis que l'autre borne de la résistance R46 est relié à une borne du condensateur C48 dont l'autre borne est mise à la masse. Le point i de connexion entre la résistance R46 et le condensateur C48 est relié aux deux entrées d'une porte logique OU référencée P03, dont la sortie k est reliée à la base d'un transistor Darlington T3 de type NPN. Le collecteur du transistor T3 est porté au potentiel VS et l'émetteur de ce transistor T3 est relié à une borne d'une résistance de charge R47 dont l'autre borne est mise à la masse.

Le signal impulsionnel de sortie des moyens de discrimination et de mise en forme est fourni par l'émetteur du transistor T3. Ce signal référencé IMP est destiné à être fourni à l'appareil du type CAB TROP en vue du comptage des photons X incidents sur le photo-scintillateur.

Les trois portes logiques P01, P02 et P03 peuvent être réalisées à partir d'un circuit intégré qui en comporte quatre, la quatrième porte logique référencée P04 sur la figure 5 n'étant pas utilisée dans la présente invention et ayant ses deux entrées mises à la masse, un condensateur de découplage C51 étant prévu au niveau de l'alimentation de cette porte P04.

A titre purement indicatif et nullement limitatif, les composants représentés sur les figures 4 et 5 sont du type suivant :

T3 = BSS52
CP1, CP4 = LM 319 de National Semiconductor
CP2, CP3 = LM 319 de National Semiconductor
CM = 4066 de RTC
MS = 4047 de RTC
P01, P02, P03, P04 = 4071 de RTC
Z3 = 1 N 823
R51 = 1 kilo-ohm
RV1 = ajustable de 0 à 22 kilo-ohms
RV2 = ajustable de 0 à 22 kilo-ohms
RV3 = ajustable de 0 à 22 kilo-ohms
RV4 = ajustable de 0 à 22 kilo-ohms
C41 = 100 nF, tension de claquage : 60 V
C42 = 100 nF, tension de claquage : 60 V
C43 = 100 nF, tension de claquage : 60 V
C44 = 100 nF, tension de claquage : 60 V
R41 = 1 kilo-ohm     R43 = 1 kilo-ohm
R42 = 1 kilo-ohm     R44 = 1 kilo-ohm
C45 = 100 nF, tension de claquage : 60 V
C46 = 220 pF, tension de claquage : 60 V
C47 = 100 nF, tension de claquage : 60 V
C48 = 1 nF, tension de claquage : 60 V
R45 = 10 kilo-ohms     R48 = 12 kilo-ohms
R46 = 470 ohms     R49 = 12 kilo-ohms
R47 = 10 kilo-ohms     R50 = 12 kilo-ohms

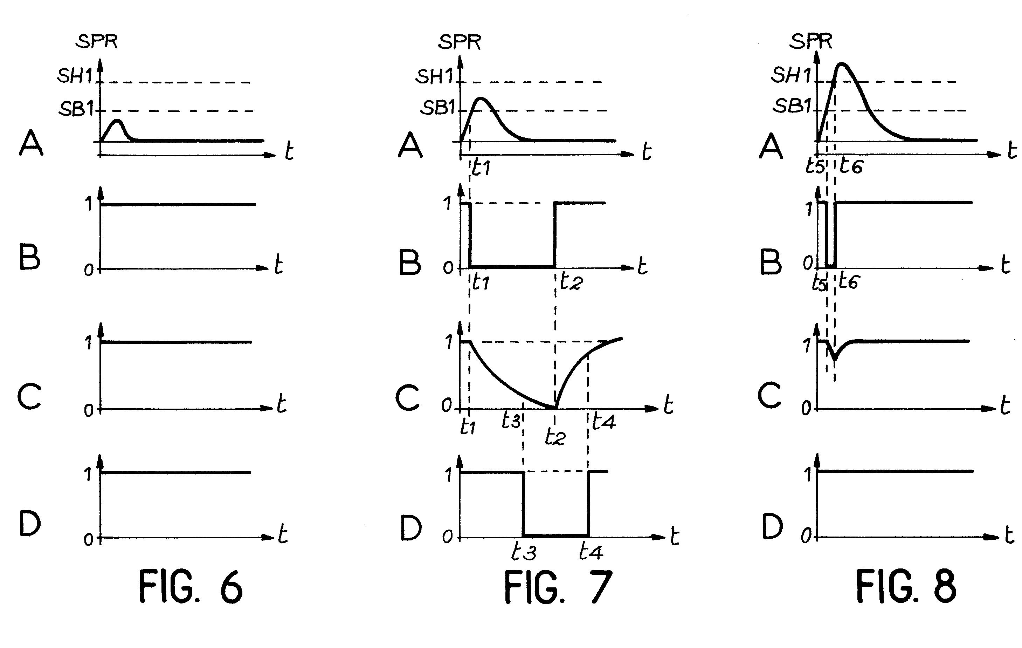

Le fonctionnement ds moyens de discrimination et de mise en forme étant le même pour chaque fenêtre, ce fonctionnement va maintenant être décrit dans le cas où la fenêtre allant de 10 keV 30 keV est sélectionnée, en se référant aux figures 6 à 8.

Lorsque l'amplitude maximale du signal présent au point c (figure 4) est inférieure à SB1 (figure 6-A), la sortie du monostable MS (figure 6-B), la sortie i de l'intégrateur (figure 6-C) et la sortie k de la porte P03 (figure 6-D) restent à un niveau de tension haut.

Lorsque l'amplitude maximale du signal présent au point c est comprise entre SB1 et SH1 (figure 7-A), la sortie de MS passe au niveau logique 0 à l'instant t1 en lequel l'amplitude du signal présent au point c devient supérieure à SB1 et repasse au niveau logique 1 à l'instant t2 tel que t2-t1 = 1,5 microseconde (figure 7-B) ; le signal de sortie de l'intégrateur décroît à l'instant t1 vers un niveau de tension bas qu'il atteint à l'instant t2 à partir duquel il croît vers son niveau de tension haut (figure 7-C) ; et la sortie de la porte P03 est portée au niveau logique 0 à un instant t3, niveau qu'elle conserve jusqu'à l'instant t4 en lequel elle repasse au niveau logique 1 (figure 7-D), t3 étant compris entre t1 et t2 et t4 étant supérieur à t2. Les instants t3 et t4 dépendent de la porte OU utilisée. Dans l'exemple donné, t4-t3 = 1,5 microseconde.

Lorsque l'amplitude maximale du signal présent au point c est supérieure à SH1 (figure 8-A), la sortie de MS passe au niveau logique 0 à l'instant t5 en lequel l'amplitude du signal présent au point c dépasse SB1, niveau qu'elle conserve jusqu'à l'instant t6 en lequel elle repasse au niveau logique 1, l'instant t6 étant celui en lequel le signal présent au point c dépasse SH1 (figure 8-B) ; la sortie de l'intégrateur passe, à l'instant t5, de son niveau de tension haut à un niveau légèrement inférieur qu'elle atteint à l'instant t6 à partir duquel elle repasse à son niveau de tension haut (figure 8-C) et la sortie de la porte P03 reste à son niveau logique 1 (figure 8-D).

On notera qu'en la sortie de la porte P03, on dispose d'un signal filtré, à savoir un niveau logique 1 lorsque l'énergie du photon X incident sur le photo-scintillateur est en dehors de la fenêtre sélectionnée, et un niveau logique 0 pendant 1,5 micro-secondes (dans l'exemple donné) lorsque l'énergie du photon X incident sur le photo-scintillateur est compris dans la fenêtre sélectionnée.

On notera également que la forme des signaux de sortie IMP fournis par l'émetteur du transistor T3 sont du type "impulsions négatives". Ces signaux ont une amplitude de 12 volts et une durée de 1,5 micro-secondes dans l'exemple donné.

On remarquera aussi que la partie "mise en forme" du circuit représenté sur la figure 4 est constituée du monostable MS et du transistor T3, le transistor T3 définissant l'amplitude du signal de sortie IMP et le monostable MS définissant la durée de ce signal IMP.

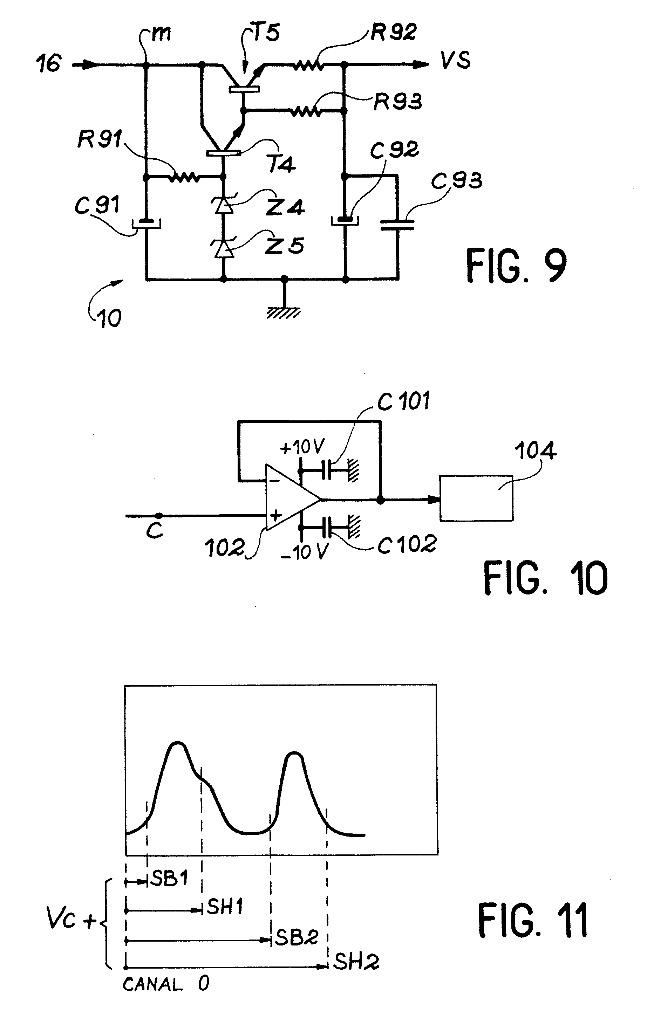

Sur la figure 9, on a représenté un schéma des moyens 10 de régulation de la tension d'alimentation du pré-amplificateur 6 et des moyens 8 de discrimination et de mise en forme. Le courant électrique d'alimentation de ces derniers est par exemple fourni par un ensemble de 10 batteries au cadmium-nickel du type RSH4 (1,24V-4Ah).

En charge, cet ensemble peut fournir une tension de 18 volts. Les moyens de régulation de tension protègent la sonde de l'invention en fixant le potentiel VS à 12 volts environ (dans l'exemple donné).

Les moyens de régulation de tension comprennent deux transistors de type NPN qui sont référencés T4 et T5 sur la figure 9. L'émetteur du transistor T4 est relié à la base du transistor T5 et les collecteurs des deux transistors sont reliés à un même point m. Ce point m est porté à un potentiel positif, qui peut varier entre 18 et 12,6 volts environ dans l'exemple donné, par l'ensemble de batteries. Le point m est également relié à une borne d'une résistance de polarisation R91 dont l'autre borne est reliée à la base du transistor T4. Ladite borne de la résistance R91 est reliée à la borne + d'un condensateur électrolytique de couplage C91 dont la borne - est mise à la masse.

En vue de fixer le potentiel VS à environ 12 volts, on utilise deux diodes Zener Z4 et Z5, l'anode de Z4 étant reliée à la cathode de Z5, la cathode de Z4 étant reliée à la base du transistor T4 et l'anode de Z5 étant mise à la masse.

Le circuit représenté sur la figure 9 comprend également deux résistances R92 et R93 destinées à limiter le courant de sortie des moyens de régulation de tension. Les résistances R92 et R93 ont une borne commune en laquelle le potentiel VS est disponible, l'autre borne de la résistance R92 étant reliée à l'émetteur de T5 et l'autre borne de la résistance R93 étant reliée à la base de ce transistor T5. La borne commune aux résistances R92 et R93 est reliée à la borne + d'un condensateur électrolytique de couplage C92 et à la borne d'un condensateur de découplage C93, la borne - du condensateur C92 et l'autre borne du condensateur C93 étant mises à la masse.

A titre purement indicatif et nullement limitatif, les composants du circuit représenté sur la figure 9 sont du type suivant :

T4 = 2N1711
T5 = TIP31
Z4 = BZX55C 6 V 8
Z5 = BZX55C 6 V 2
C91 = 1,7 pF, tension de claquage 25 V
C92 = 47 microfarads, tension de claquage 16 V
C93 = 100 nF, tension de claquage : 60 V
R91 = 820 ohms
R92 = 1 ohm
R93 = 100 ohms

Pour effectuer le réglage de la sonde selon l'invention, on effectue d'abord le réglage de la très haute tension d'alimentation du photo-multiplicateur. Celle-ci est ajustée en fonction des caractéristiques du photo-multiplicateur utilisé jusqu'à ce que l'on trouve l'optimum signal/bruit correspondant un bruit de fond minimum pour une sensibilité correcte. A cet effet, on place en regard du photo-scintillateur une source d'américium 241. On règle la très haute tension de manière que l'amplitude maximale du signal SPM visualisé sur un oscilloscope soit d'environ 200 mV (amplitude correspondant à un photon X d'énergie 60 keV). La très haute tension est comprise entre 1150 et 1200 volts environ. Le réglage de l'optimum de très haute tension peut être amélioré lors d'un ajustement plus fin de l'ensemble des composants de la sonde de l'invention.

Le réglage du pré-amplificateur est ensuite effectué. Ce réglage fait simplement intervenir la résistance ajustable P2, la résistance R34 et le condensateur C34 (figure 3).

Le photo-multiplicateur délivrant un signal d'amplitude maximale 200 mV, il est possible d'ajuster le gain du pré-amplificateur de 1 à 10 en tension (les comparateurs des moyens de discrimination et de mise en forme étant suffisamment sensibles pour fonctionner avec des signaux d'amplitude faible).

On injecte un signal à l'entrée du pré-amplificateur au moyen d'un générateur apte à fournir un signal carré, d'amplitude réglable de 0 à 200 mV, de fréquence 5 kHz et de largeur 5 micro-secondes. On visualise sur un oscilloscope les signaux d'entrée et de sortie du pré-amplificateur. Le réglage de ce dernier consiste en un réglage de la résistance ajustable P2 de manière à obtenir une linéarité de réponse, pour un signal d'entrée dont l'amplitude varie de 50 mV à 200 mV. En cas d'impossibilité, on peut modifier la contre-réaction apportée par R34 et C34 en modifiant les valeurs de ceux-ci.

On règle enfin les moyens de discrimination et de mise en forme. A cet effet, le signal présent au point c (figure 4) est envoyé à l'entrée d'un analyseur de spectre du genre de celui qui est commercialisé par la société INO-TEC, en vue de visualiser le spectre de l'américium 241.

L'adaptation d'impédance entre la sonde et l'analyseur de spectre est obtenue au moyen d'un amplificateur à double tension, référencé 102 sur la figure 10, dont l'entrée + est reliée au point c et dont la sortie est reliée à l'analyseur de spectre 104 ainsi qu'à l'entrée - de cet amplificateur 102, les bornes d'alimentation de l'amplificateur 102 étant respectivement munies de condensateurs de découplage C101 et C102.

A titre purement indicatif et nullement limitatif les composants du montage représentés sur la figure 10 sont les suivants :

C101 = 100 nF, tension de claquage : 60 V
C102 = 100 nF, tension de claquage : 60 V
Comparateur 102 = LF356 -National Semiconductor

La méthode de réglage est la suivante (figure 11) :
- on mesure la tension continue Vc+ au point c (figure 4),
- on effectue la conversion canaux/tensions sur l'analyseur de spectre (0 à 10 volts pour tous les canaux),

- on tire l'équivalence tension-canal,
- on présente une source d'américium 241 et l'on enregistre un spectre, et
- on règle, à l'aide d'un voltmètre et en agissant sur les quatre résistances ajustables des moyens de discrimination et de mise en forme, les tensions pour les quatre seuils SB1, SH1, SB2 et SH2, en additionnant à la tension-canal le décalage Vc.

Le réglage des seuils qui définissent les fenêtres d'énergie est facile à faire. En outre, la sonde a une bonne sensibilité et est agréable à employer du fait de son faible bruit de fond. Il s'agit en effet d'une sonde qui est prévue pour s'adapter aux caractéristiques du photo-multiplicateur qu'elle utilise ; la recherche d'un réglage optimum signal/bruit garantit une grande fiabilité du photo-multiplicateur et permet d'utiliser des photo-multiplicateurs donnant lieu à un bruit de fond trop élevé pour qu'ils puissent être utilisés avec l'appareil LON 307 de la société NARDEUX.

La présente invention n'est pas limitée à la détection de rayons X. La sonde de l'invention est également utilisable pour la détection de photons gamma par exemple, en choisissant un photoscintillateur et des fenêtres d'énergie appropriés. Il convient alors d'utiliser, dans le préamplificateur, une résistance ajustable P2 apte à prendre des valeurs de résistance comprises dans un domaine compatible avec le rayonnement à détecter.

## Revendications

1. Système de traitement de signaux susceptibles d'être fournis par un dispositif (4) de détection de rayonnements, tel que ces signaux aient des amplitudes sensiblement proportionnelles aux énergies des rayonnements, le système (2) étant destiné à être relié au dispositif (4) et étant caractérisé en ce qu'il comprend :
   - des moyens (6) d'amplification des signaux susceptibles d'être fournis par le dispositif (4), et
   - des moyens (8) de discrimination et de mise en forme, plusieurs fenêtres d'énergie, munis de moyens (100) de sélection de ces fenêtres et aptes à fournir, étant donné une fenêtre sélectionnée, des impulsions à partir des signaux amplifiés par les moyens d'amplification, seulement pour les rayonnements dont les énergies sont comprises dans cette fenêtre, en vue du comptage de ces impulsions.

2. Système selon la revendication 1, caractérisé en ce que les moyens (6) d'amplification comprennent un filtre en fréquence (R34, C34), choisi de façon que l'amplitude des signaux de sortie des moyens d'amplification (6) soit proportionnelle à l'amplitude des signaux d'entrée de ces moyens (6), dans le domaine des énergies que les rayonnements sont susceptibles d'avoir.

3. Système selon l'une quelconque des revendications 1 et 2, caractérisé en ce que, chaque fenêtre d'énergie étant définie par un seuil inférieur d'énergie et par un seuil supérieur d'énergie, les moyens (8) de discrimination et de mise en forme comprennent :
   - des comparateurs (CP1, CP2, CP3, CP4) respectivement associés aux seuils d'énergie, chaque comparateur ayant une entrée + reliée à la sortie des moyens (6) d'amplification et une entrée - portée à un potentiel réglé en fonction du seuil d'énergie associé,
   - des moyens (CM) de commutation, reliés aux moyens (100) de sélection des fenêtres et prévus pour fournir, suivant la fenêtre sélectionnée, deux signaux respectivement représentatifs des résultats des comparaisons du signal de sortie des moyens (6) d'amplification aux deux potentiels correspondant à cette fenêtre,
   - des moyens (MS, R46, C48) de traitement de ces deux signaux, munis d'une sortie prévue pour fournir un signal dont l'amplitude varie entre une valeur minimale et une valeur maximale et qui atteint la valeur minimale seulement pour les énergies comprises dans la fenêtre, et
   - une porte logique OU (P03) dont les deux entrées sont reliées à la sortie ds moyens (MS, R46, C48) de traitement et dont la sortie est apte à fournir lesdites impulsions.

4. Système selon la revendication 3, caractérisé en ce que les moyens (MS, R46, C48) de traitement comprennent un circuit monostable (MS) à deux entrées destinées à recevoir respectivement les deux signaux représentatifs des résultats des comparaisons, et un circuit intégrateur (R46, C48) dont l'entrée est reliée à la sortie du circuit monostable (MS) et dont la sortie est reliée aux deux entrées de la porte OU (P03).

5. Système selon l'une quelconque des revendications 3 et 4, caractérisé en ce que les moyens (8) de discrimination et de mise en forme comprennent en outre des moyens (T3) aptes à donner auxdites impulsions une amplitude adaptée à des moyens (20) prévus pour leur comptage.

6. Système selon l'une quelconque des revendications 1 à 5, caractérisé en ce que les moyens (8) de discrimination et de mise en forme ont une première, une deuxième et une troisième fenêtres d'énergie, chaque fenêtre étant définie par un seuil inférieur d'énergie et un seuil supérieur d'énergie, et en ce que la deuxième fenêtre contient la première et la troisième fenêtres et a des seuils inférieur et supérieur qui sont respectivement égaux au seuil inférieur de la première fenêtre et au seuil supérieur de la troisième fenêtre.

7. Système selon la revendication 6, caractérisé en ce que les rayonnements sont des rayonnements X et en ce que les fenêtres sont les intervalles d'énergie allant respectivement de 10 keV à 30 keV, de 10 keV à 70 keV et de 50 keV à 70 keV, environ.

8. Système selon l'une quelconque des revendications 1 à 7, caractérisé en ce que, le dispositif (4) destiné à être relié aux moyens (6) d'amplification nécessitant une tension électrique d'alimentation. le système (2) comprend en outre des moyens (12) d'ajustement de cette tension.

9. Sonde de détection de rayonnements, comprenant :

- un dispositif (4) de détection de ces rayonnements, apte à fournir des signaux dont les amplitudes sont sensiblement proportionnelles aux énergies des rayonnements, et

- un système (2) de traitement de ces signaux, sonde caractérisée en ce que le système (2) est conforme à l'une quelconque des revendications 1 à 8.

10. Sonde selon la revendication 9, caractérisée en ce que le dispositif (4) comprend un photomultiplicateur (5) associé à un scintillateur (24) sensible aux rayonnements.

0262018

FIG. 1

FIG. 3

0262018

FIG. 2

FIG. 4

FIG. 5

**FIG. 6**

**FIG. 7**

**FIG. 8**

0262018

0262018

FIG. 9

FIG. 10

FIG. 11

Office européen
des brevets

**RAPPORT DE RECHERCHE EUROPEENNE**

Numero de la demande

EP  87 40 1963

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X,Y | FR-A-1 002 499  (LA RADIO-INDUSTRIE)<br>* Page 1, colonne 1, lignes 12-34; page 1, colonne 2, ligne 21 - page 2, colonne 1, ligne 43; figures * | 1,3,5,9 ,10 | G 01 T    1/36<br>G 01 T    1/208 |
| A |  | 6 | |
| Y | US-A-3 105 149  (GUITTON & LALLEMANT)<br>* Colonne 2, lignes 26-64; colonne 3, ligne 24 - colonne 4, ligne 8; figures * | 1,3,5,9 ,10 | |
| A |  | 6 | |
| A | R.L. CHASE: "Nuclear Pulse Spectrometry", 1961, pages 46-47,74-79, McGraw-Hill Book Company, Inc., New York, US;<br>* Page 47, figures 2,18; page 74, ligne 1 - page 76 * | 1,2,8,9 | |
| A | US-A-4 316 086  (HOPKINSON)<br>* Colonne 7, lignes 8-35; figures 5,6 * | 1,3,6,9 | |

DOMAINES TECHNIQUES
RECHERCHES (Int. Cl.4)

G 01 T
G 01 R

Le présent rapport a été établi pour toutes les revendications

| Lieu de la recherche | Date d'achèvement de la recherche | Examinateur |
|---|---|---|
| LA HAYE | 11-12-1987 | DATTA S. |